# FASCICULE DE BREVET EUROPEEN

(11) **EP 0 320 336 B1**
(45) Date de publication et mention de la délivrance du brevet: **10.02.1993**
(21) Numéro de dépôt: 88402993.5
(22) Date de dépôt: 29.11.1988
(51) Int. Cl.: G07B 15/02, G07F 7/00

(54) **Système de gestion par carte du stationnement payant de véhicules**
Verwaltungssystem mit Karten für Autoparkgebühren
Management system with cards for vehicle parking fees

(30) Priorité: 08.12.1987 FR 8717041
(43) Date de publication de la demande: 14.06.1989
(73) Titulaire: SCHLUMBERGER INDUSTRIES, F-92120 Montrouge (FR)
(72) Inventeur: Bezin, Jean Louis, F-25870 Devesey (FR); Eonnet, Yves, Virginia Beach Virginia 23464 (US)
(74) Mandataire: Hasenrader, Hubert

(56) Documents cités:
- EP-A- 0 193 320
- DE-A- 2 809 692
- FR-A- 2 562 291
- FR-A- 2 583 186
- FR-A- 2 594 985
- GB-A- 210 392
- US-A- 4 379 334

## Description

La présente invention concerne un système de gestion par carte du stationnement payant de véhicules.

De façon plus précise la présente invention a pour objet un système de gestion du stationnement de véhicules dans lequel les usagers peuvent acquitter le droit de stationnement à l'aide d'une carte magnétique ou à mémoire électronique et les préposés à la surveillance du stationnement disposent d'un terminal portable pour vérifier si les véhicules en stationnement sont en situation régulière ou non.

Un tel système a déjà été décrit dans le brevet français 2.583.186 délivré le 20/10/87 pour "Système de gestion de stationnement payant". Selon ce brevet le contrôle du stationnement est réalisé à partir d'un couple d'informations que l'usager doit introduire dans la mémoire de la borne de stationnement au début de la période de stationnement de son véhicule. La première de ces informations est une information d'identification du véhicule qui peut être le numéro de l'emplacement de stationnement où est laissé le véhicule ou, de préférence, le numéro d'immatriculation du véhicule ou une partie de celui-ci. La deuxième de ces informations est l'heure limite de stationnement autorisé. Lorsque le préposé veut contrôler la régularité de stationnement d'un véhicule il lui suffit d'entrer dans son terminal portable le numéro d'immatriculation du véhicule ou le numéro de l'emplacement de stationnement. Selon plusieurs modalités possibles le terminal compare le numéro entré avec les numéros en mémoire et il vérifie si l'heure limite de stationnement autorisée correspondante est expirée ou non.

Un tel système permet, comme celà est clairement expliqué dans le brevet déjà cité, de simplifier considérablement le contrôle du stationnement payant des véhicules.

Cependant, la nature de l'information d'identification du véhicule peut dans certains cas présenter certains inconvénients. Lorsque cette information consiste dans le numéro de l'emplacement de stationnement, il est nécessaire de délimiter ces emplacements et de leur affecter un numéro qui soit encore lisible après que l'usager ait garé son véhicule. Celà n'est pas toujours facile. Lorsque l'information d'identification consiste dans le numéro d'immatriculation, certains usagers peuvent considérer comme désagréable que la borne de stationnement conserve en mémoire pour une durée plus ou moins longue une information qui pourrait permettre de savoir qu'ils ont stationné à un endroit donné et à un moment donné alors qu'ils étaient en stationnement parfaitement régulier.

Un objet de la présente invention est de fournir un système de gestion de stationnement payant qui présente au moins tous les avantages du système décrit dans le brevet déjà cité mais qui n'utilise comme information d'identification du véhicule ni le numéro d'emplacement de stationnement, ni le numéro d'immatriculation du véhicule.

Pour atteindre ce but, selon l'invention, le système de gestion par cartes du stationnement payant de véhicule comprend :
une pluralité de supports d'informations portables, chaque support d'informations étant détenu par un utilisateur de véhicule, et comportant une information d'identification propre à la carte, et une zone pour mémoriser des soldes successifs ;
une borne de stationnement pour contrôler une pluralité d'emplacements de stationnement, ladite borne comprenant des moyens pour lire et pour écrire des informations dans lesdits supports d'informations, des moyens pour entrer dans ladite borne une information d'heure limite de stationnement autorisé en fonction d'un pré-paiement effectué par ledit utilisateur, des moyens pour mémoriser des couples de données correspondant à l'information d'identification et à l'information d'heure limite de stationnement autorisé correspondante et des premiers moyens pour délivrer une information de temps présent ;
un terminal portable porté par le préposé à la surveillance du stationnement comportant des moyens accessibles audit préposé pour entrer une donné d'identification du véhicule en stationnement à l'un desdits emplacements ; et
des moyens pour comparer la donnée d'identification entrée aux informations d'identification mémorisées, des moyens pour comparer les informations mémorisées d'heure limite de stationnement autorisé à ladite information de temps présent et des moyens de traitement pour traiter les résultats desdites comparaisons pour faire apparaître dans ledit terminal un signal d'avertissement lorsque le véhicule dont l'information d'identification a été introduite dans ledit terminal est en stationnement irrégulier ;
et il se caractérise en ce qu'il comprend en outre :
une pluralité de moyens d'affichage distincts de plaques minéralogiques aptes à être fixés sur un véhicule, chaque moyen d'affichage portant une donnée d'identification, chaque donnée d'identification étant reliée de façon bi-univoque à l'information d'identification portée sur ledit support d'informations ; et
en ce que les informations d'identifications sont indépendantes du propriétaire du véhicule et du numéro d'immatriculation de celui-ci.

Ainsi la borne de stationnement ne contient en mémoire aucune information directement liée au véhicule c'est à dire à son propriétaire. L'information d'identification contenue dans la mémoire du support d'informations, par exemple de la carte, est totalement indépendante du véhicule et de son propriétaire.

Un autre objet de l'invention est de fournir un système de gestion du stationnement payant de véhicules du type défini précédemment dans lequel, de plus, l'usager ne paie un droit de stationnement que pour la durée effective du stationnement de son véhicule.

Pour cela la borne comprend des moyens pour comparer, lors de l'introduction d'un support d'informations, l'heure de ladite introduction avec lesdites informations mémorisées d'heure limite de stationnement autorisé, et l'information d'identification mémorisées et des moyens de traitement desdites comparaisons pour modifier le solde mémorisé dans ledit support si l'information d'identification dudit support avec lesdites informations d'identification dudit support est bien mémorisée et si l'heure limite de stationnement autorisé correspondante est postérieure à l'heure d'introduction.

D'autres caractéristiques et avantages de l'invention apparaîtront plus clairement à la lecture de la description qui suit de plusieurs modes de réalisation de l'invention donnés à titre d'exemples non limitatifs. La description se réfère au dessin annexé sur lequel:
la figure 1 montre les différentes parties du système selon un premier mode de mise en oeuvre;et
la figure 2 une variante de réalisation du mode de mise en oeuvre de la figure 1.

Comme on l'a déjà indiqué une partie de la présente invention est déjà décrite dans le brevet français 2.583.186.Il faut considérer que l'ensemble de la description de ce brevet fait partie intégrante de la présente description.

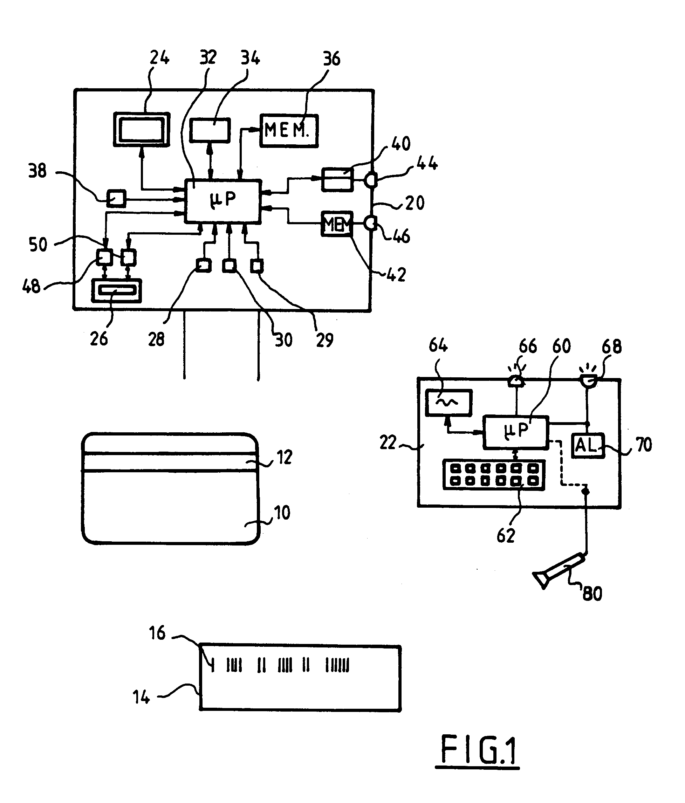

En se référant tout d'abord à la figure 1 on va décrire un premier mode de réalisation de l'invention.

Lorsqu'un usager, un automobiliste par exemple, veut pouvoir acquitter le droit de stationnement à l'aide d'une carte, il achète auprès de l'organisme de gestion du stationnement une carte 10 qui est, dans l'exemple décrit, une carte munie d'une piste magnétique 12. On lui remet en même temps une vignette 14 qui est associée à la carte 10.

Sur la piste magnétique 12 de la carte 10 sont essentiellement déjà inscrits un numéro d'identification II codé, et un solde dont le montant correspond à la somme versée par l'usager lors de l'achat de sa carte. La vignette 14 comporte sur une de ses faces une donnée d'identification par exemple sous forme de code à barres 16. La donnée d'identification DI de la vignette 14 correspond au numéro d'identification II mémorisée dans la carte 10 par un algorithme secret ALG, de telle manière qu'il existe une relation bi-univoque entre les numéros d'identification II des différentes cartes 10 et les données d'identification DI inscrites sur les différentes vignettes 14 associées aux cartes 10. Lorsque la carte 10 et la vignette associée 14 sont remises à l'usager, il lui est indiqué que la vignette 14, qui est par exemple auto collante, doit être fixée derrière le pare brise de son véhicule, comme une vignette fiscale.

Le système de gestion comprend également une borne de stationnement 20 qui est disposée à proximité des différents emplacements de stationnement qu'on veut contrôler. Le système comprend enfin un terminal portable 22 qui est détenu par le préposé à la surveillance du stationnement.

La borne de stationnement 20 comporte essentiellement sur sa face avant un dispositif d'affichage 24, un lecteur de carte magnétique 26, une touche 28 de durée de stationnement, une touche 29 d'annulation et une touche de validation 30.

On a représenté également sur la figure 1 les principaux circuits, que l'on trouve dans la borne 20, du moins pour la partie de celle-ci qui est concernée par l'invention. Ces circuits comprennent un microprocesseur 32 associé à une mémoire de programme 34 et une mémoire de données 36, une base de temps 38 qui délivre une information de temps présent, un émetteur 44 de signaux infra-rouges, et un récepteur de signaux infra-rouges 46 associé à une mémoire tampon 42. Le microprocesseur 32 sert également à commander le dispositif d'affichage 24 ainsi que la tête de lecteur 48 et la tête d'écriture 50 du lecteur 26 de cartes magnétiques. Enfin le microprocesseur 32 reçoit les signaux émis par les touches 28, 29 et 30 lorsque celles-ci sont actionnées par un usager.

Si l'on considère maintenant le terminal portable 22, il comporte un microprocesseur 60, un clavier d'entrée 62 et un dispositif d'affichage 64. Il comprend également un émetteur de signaux infra-rouges 66 qui est commandé par le microprocesseur 60 et un récepteur de signaux infra-rouges 68 dont la sortie est reliée au microprocesseur 60 et au circuit d'alarme 70 qui permet de faire apparaître une information spécifique lorsqu'un véhicule controlé est en stationnement irrégulier.

Au terminal portable 22 est associé un lecteur optique 80 par exemple un lecteur de codes à barres, qui est branché sur le terminal pour que le microprocesseur 60 reçoive les informations lues par le lecteur 80.

On va maintenant décrire le fonctionnement du système représenté sur la figure 1. Lorsqu'un automobiliste veut acquitter la taxe de stationnement pour son véhicule, il entre sa carte 10 dans le lecteur 26 de la borne de stationnement 20. La détection de la présence d'une carte déclenche le déroulement d'un programme ST stocké dans la mémoire 34, sous le contrôle du microprocesseur 32. Le lecteur 26,48 lit l'information d'identification II et le solde disponible dans la carte.

Le programme ST compare l'information d'identification II lue aux informations d'identifications mémorisées dans la mémoire de données 36. Si l'information d'identification lue n'y figure pas la machine l'interprête comme voulant dire que le détenteur de la carte veut faire partir une période de stationnement. Cette détection déclenche le déroulement d'un nouveau programme STA. Si l'information d'identification II lue dans la carte figure parmi les informations stockées dans la mémoire de données, le programme ST lit l'information d'heure limite de stationnement autorisé HLSA qui lui est associée et compare cette information à l'information de temps présent délivrée par le circuit d'horloge 38. Si l'information HLSA correspond à une heure déjà expirée, le programme ST l'interprête également comme signifiant que l'automobiliste qui a entré sa carte veut faire partir une période de stationnement. Cette détection met en route le programme STA. Au contraire, si l'heure correspondant à l'information HLSA n'est pas expirée, le programme ST l'interprête comme signifiant que l'automibiliste veut mettre fin à la période de stationnement de son véhicule et récupérer le montant de taxe de stationnement qu'il a versé en trop. Cette détection déclenche alors la mise en oeuvre d'un autre programme STR.

On va d'abord supposer que l'automobiliste veut faire partir une période de stationnement, c'est à dire que c'est le programme STA qui se déroule. L'afficheur 24 fait apparaître un message qui invite l'usager à entrer la durée de stationnement désirée. Cette donnée est introduite à l'aide de la touche 28, chaque pression correspondant par exemple à un quart d'heure de stationnement. Le programme STA calcule alors l'heure limite de stationnement autorisé HLSA et le montant de la taxe correspondante. Le programme STA compare également le montant calculé au solde disponible dans la carte qui a été lu initialement. Si le montant est suffisant rien ne se passe. Si le montant est insuffisant, l'afficheur 24 indique l'heure limite de stationnement possible compte tenu du montant disponible. L'usager peut alors renoncer à l'opération en appuyant sur la touche 29 d'annulation, et sa carte lui est restituée. Au contraire il peut appuyer sur la touche 30 de validation pour signifier à la machine son acceptation. Dans ce dernier cas, le microprocesseur 32 calcule le nouveau solde à partir de l'ancien. La tête d'écriture 50 du lecteur 26 est alors commandée pour effacer l'ancien solde sur la piste magnétique 12 de la carte et pour le remplacer par le nouveau solde. A titre de précaution on peut également enregistrer sur la piste magnétique un numéro de transaction, le montant de la taxe prélevée, la date de l'opération et l'information HLSA et une information indiquant qu'un eventuel trop versé n'a pas été récupéré L'utilisateur peut alors enlever sa carte du lecteur 26.

Simultanément le programme STA commande l'inscription dans la mémoire de données 36, de l'information d'identification II lue dans la carte et de l'information HLSA correspondante qui a été calculée. Par précaution on peut également enregistrer dans cette mémoire le numéro de la transaction, la date de l'opération et le montant prélevé. La mémoire 36 comprend donc un tableau de couples d'informations, chaque couple comportant, une information d'identification II et l'information HLSA correspondante.

Lorsque l'usager veut mettre fin au stationnement de son véhicule deux situations peuvent se présenter : soit il a dépassé le temps de stationnement pour lequel il a acquitté une taxe, et il est en infraction, soit il n'a pas épuisé son temps de stationnement et il pourra récupérer le trop versé.

Pour récupérer le trop versé, l'utilisateur introduit sa carte 10 dans le lecteur 26. Cette introduction de la carte déclenche le déroulement du programme ST comme on l'a déjà indiqué. Lors de la comparaison entre l'information d'identification lue dans la carte avec les informations II stockées dans la mémoire 36 on détecte que l'information II y figure déjà et qu'elle est associée à une information HLSA non expirée. Le programme STR est donc mis en oeuvre par le microprocesseur 32. Le programme STR calcule l'intervalle de temps entre l'information de temps présent fournie par la base de temps 38 et l'information HLSA, et convertit ce temps de stationnement inutilisé en un montant. Ce montant correspondant au trop versé doit être recrédité dans la carte 10. Pour cela le microprocesseur calcule le nouveau solde, et la tête d'écriture 48 efface l'ancien solde sur la piste magnétique 12 et réinscrit le nouveau solde.De plus l'information indiquant qu'un eventuel trop versé n'a pas été récupéré est effacée.

Le couple information d'identification II, information d'heure limité de stationnement autorisé HLSA est effacé de la mémoire 36 et toutes les données relatives à cette transaction sont réécrites dans une zone spéciale 36′ de la mémoire 36.

Dans la mémoire 36 proprement dite on ne trouve donc que les couples d'informations II, HLSA correspondant à des véhicules pour lesquels aucune demande de remboursement du trop versé n'a été faite.

Le contrôle du stationnement des véhicules par le préposé se fait de la manière suivante. Il porte sur lui le terminal 22 avec son lecteur optique 80. Pour chaque véhicule portant une étiquette 14, il relève à l'aide du lecteur 80 la donnée d'identification DI. Cette donnée est appliquée au microprocesseur 60 qui met en oeuvre un programme ALG. Ce programme décode la donnée d'identification ID à l'aide de l'algorithme ALG ce qui donne l'information d'identification II mémorisée dans la carte 10 de l'utilisateur du véhicule. Puis le microprocesseur 60 commande l'émetteur 66 pour que celui-ci émette un signal infra-rouge correspondant à l'information d'identification II. Le signal infra-rouge est reçu par le récepteur 46, et converti en une valeur numérique II qui est stockée temporairement dans la mémoire 42. Cette réception provoque le déroulement d'un programme COMP sous le contrôle du microprocesseur 32. Le programme COMP compare l'information d'identification stockée dans la mémoire 42 aux informations d'identification II contenues dans la mémoire 36 proprement dite. Si l'information II n'y figure pas c'est que l'usager n'a pas acquitté le droit de stationnement ou bien qu'il l'a payé mais qu'il a demandé un remboursement de trop versé sans retirer son véhicule de l'emplacement de stationnement. Dans les deux cas il est en infraction. Le microprocesseur 32 commande l'émetteur 44 pour qu'il émet un signal infra-rouge indiquant qu'il y a infraction. Ce signal reçu par le capteur 68 du terminal portable 22 déclenche l'activation du voyant d'alarme 70. Au contraire si l'information d'identification II se trouve bien dans la mémoire 36 proprement dite c'est que le véhicule correspondant est en stationnement régulier.

Il découle de la description précédente que l'usager ne paie que pour la durée effective de stationnement de son véhicule puisque, s'il a prévu au départ une durée de stationnement supérieure à la durée de stationnement réel, il est remboursé du trop versé.

Il est possible de modifier la définition de l'heure limite de stationnement autorisé HLSA de la manière suivante : lorsque l'usager introduit sa carte 10 dans le lecteur 26, la durée de stationnement est automatiquement considérée par le programme STA comme étant égale à la durée maximale de stationnement autorisé, par exemple deux heures. Le programme STA calcule le montant de la taxe correspondant à cette durée maximale et le compare au solde mémorisé dans la carte. Si le solde est suffisant, le microprocesseur 32 commande l'afficheur 24 pour qu'il indique l'heure limite de stationnement autorisé. L'usager actionne alors la touche 30 de validation, et le programme STA continue à se dérouler comme cela a été décrit précédemment. Si le solde est insuffisant, le programme STA calcule l'heure limite de stationnement autorisé possible. L'afficheur 24 indique cette heure. L'usager peut alors soit actionner la touche de validation 30 soit la touche d'annulation 29 auquel cas sa carte lui est restituée.

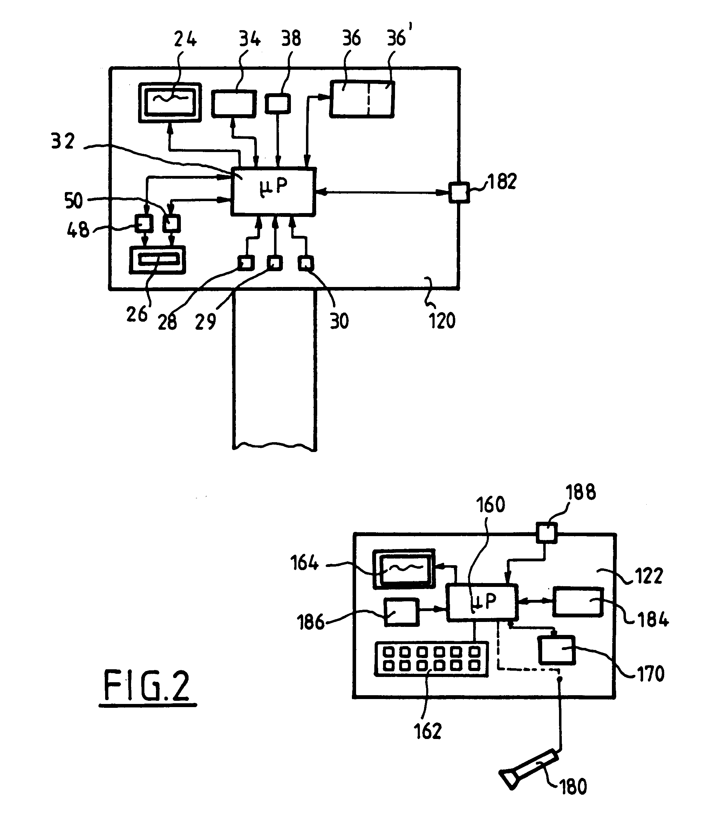

Dans le mode de réalisation qui vient d'être décrit l'information d'identification d'un véhicule est introduite par le préposé dans le terminal portable 22 et cette information est transmise par signaux infra-rouges à la borne 20 où elle est comparée à l'ensemble des informations d'identification stockées dans la mémoire 36 proprement dite. La figure 2 illustre un deuxième mode de réalisation du système de gestion de stationnement dans lequel la comparaison est effectuée dans le terminal portable 22. Selon ce mode de réalisation, l'étiquette 14 et la carte 10 sont identiques à celles de la figure 1, on ne les a donc pas représentées à nouveau sur la figure 2.

En ce qui concerne la borne qui est référencée 120 sur la figure 2, elle comporte les mêmes éléments que la borne 20 de la figure 1, à l'exception de l'émetteur 44 du récepteur 46 et de sa mémoire 42 qui ont été supprimés. En revanche la borne 120 comporte une connexion externe 180 reliée au microprocesseur 32.

Le terminal portable de la figure 2, qui est référencé 122, comprend un microprocesseur 160, un afficheur 164, un clavier 162 et un circuit d'alarme 170.de traitement du signal d'alarme. Il comporte également une mémoire de données 184 reliée au microprocesseur 160 et un circuit d'horloge 186 pour fournir au microprocesseur 160 une information de temps présent. Le terminal portable 122 comprend également une borne de connexion externe 188 reliée au microprocesseur 160. Enfin un lecteur optique 180 est branché sur le terminal 122 pour être relié au microprocesseur 160.

Le mode de fonctionnement du mode de réalisation de la figure 2 va être décrit ci-après. Les opérations effectuées par l'usager pour acquitter le montant de la taxe de stationnement sont exactement les mêmes que celles qui ont été décrites en liaison avec le mode de réalisation de la figure 1. Seul change le mode d'utilisation du terminal portable 122 par le préposé à la surveillance. Avant d'effectuer sa ronde de contrôle des véhicules en stationnement, le préposé connecte son terminal 122 à la borne 120 à l'aide des connecteurs 182 et 188. Cette connexion temporaire peut être effectuée par liaison filaire ou par tout autre moyen convenable. Lors de cette connexion la totalité des couples d'informations II, HLSA stockées dans la mémoire 36 proprement dite sont transférés dans la mémoire de données 184 du terminal 122. Lorsque le transfert est achevé, le terminal 122 est déconnecté de la borne 120 et le préposé commence sa ronde.

A l'aide du lecteur 180 il entre dans le terminal 122 la donnée d'identification portée sur l'étiquette 14 du véhicule qu'il veut contrôler. Le microprocesseur 160 met en oeuvre le programme ALG pour convertir la donnée d'identification lue en une information d'identification correspondante II. Puis le microprocesseur 160 met en oeuvre un programme de comparaison COMPA. Dans une première étape, l'information d'identification lue est comparée aux informations d'identifications chargées initialement dans la mémoire 184. Si l'information d'identification lue n'y figure pas c'est que le véhicule correspondant est en infraction et le microprocesseur 160 active le circuit d'alarme 170. Dans le cas contraire, le programme COMPA commande la lecture de l'information HLSA associée à l'information d'identification. l'information HLSA est comparée à l'information de temps présent délivrée par l'horloge 186. Si l'heure limite de stationnement autorisé est dépassée, en tenant compte éventuellement d'un délai de grâce, le véhicule est en infraction et le voyant d'alarme 170 est activé. Dans le cas contraire, le véhicule est en stationnement régulier et le préposé passe au véhicule suivant.

Il va de soi que de nombreuses modifications pourraient être apportées aux modes de réalisation des figures 1 et 2 sans sortir de l'invention telle que définie par les revendications. Les cartes magnétiques 10 pourraient être remplacées par des cartes à mémoire électronique. L'information d'identification est alors protégée en écriture pour ne pas pouvoir être modifiée, alors que la zone d'écriture du solde est libre en écriture et en lecture. Bien entendu le lecteur 26 de cartes magnétiques est remplacé par un lecteur de cartes électroniques.

Selon les modes de réalisation décrits précédemment la donnée d'identification portée par l'étiquette 14 apposée sur le véhicule est inscrite en code à barres et lue à l'aide du lecteur optique 80 ou 180. Il est également possible d'écrire cette donnée en clair. Le préposé lit la donnée d'identification et l'introduit dans le terminal 22 ou 122 à l'aide du clavier 62 ou 162. Il est encore possible de prévoir les deux modes d'inscription de la donnée d'identification pour permettre le contrôle des véhicules même en cas de défaillance du lecteur optique.

Il va de soi également que l'étiquette 14 pourrait porter une donnée d'identification enregistrée sous forme magnétique, le lecteur associé au terminal portable étant alors un lecteur magnétique.

Il faut ajouter que dans le cas de zones de stationnement payant comportant un nombre important d'emplacements de stationnement il est pratique de mettre en place plusieurs bornes de stationnement telles que la borne 20 ou la borne 120. Pour permettre le contrôle du stationnement des véhicules selon les modalités décrites précédemment il est nécessaire d'affecter chaque borne de stationnement à des emplacements de stationnement bien définis ce qui peut provoquer une gêne pour les usagers. Cette gêne peut être supprimée en prévoyant que chaque borne puisse lire les informations mémorisées dans la carte indiquant le fait que la carte n'a pas étée réintroduite dans une autre borne pour récupérer le trop versé et l'heure limite de stationnement autorisé. Le traitement de ces informations permet de restituer à l'usager le trop versé, mais il ne permet pas une bonne gestion du stationnement telle que décrite précédemment. Pour permettre simultanément la mise en ouvre de ces deux aspects de l'invention, il est possible d'interconnecter entre elles les différentes bornes de stationnement. Ce réseau d'interconnexion des bornes a pour but de provoquer le transfert de tout nouveau couple d'informations II, HLSA introduit dans la mémoire 36 d'une borne vers la mémoire 36 de l'ensemble des autres bornes. Ainsi, à chaque instant, la mémoire 36 de chaque borne contient les couples d'informations relatives à l'ensemble des véhicules en stationnement dans la zone de stationnement. Il suffit alors au préposé de charger initialement son terminal à l'une quelconque des bornes (figure 2) ou d'émettre avec son terminal le signal infra-rouge vers la borne la plus proche. Un système d'interconnexion de bornes de stationnement est décrit dans la demande de brevet français 2.584.515 publiée le 9 janvier 1987. Le texte de cette demande doit être considéré comme faisant partie intégrante de la présente description.

## Revendications

1. Système de gestion par cartes du stationnement payant de véhicule comprenant :
une pluralité de supports d'informations portables (10), chaque support d'informations étant détenu par un utilisateur de véhicule, et comportant une information d'identification propre à la carte, et une zone pour mémoriser des soldes successifs ;
une borne de stationnement (20) pour contrôler une pluralité d'emplacements de stationnement, ladite borne comprenant des moyens (26, 32) pour lire et pour écrire des informations dans lesdits supports d'informations, des moyens pour entrer dans ladite borne une information d'heure limite de stationnement autorisé en fonction d'un pré-paiement effectué par ledit utilisateur, des moyens (36) pour mémoriser des couples de données correspondant à l'information d'identification et à l'information d'heure limite de stationnement autorisé correspondante et des premiers moyens (38) pour délivrer une information de temps présent ;
un terminal portable (22) porté par le préposé à la surveillance du stationnement comportant des moyens (62) accessibles audit préposé pour entrer une donné d'identification du véhicule en stationnement à l'un desdits emplacements ; et
des moyens (60) pour comparer la donnée d'identification entrée aux informations d'identification mémorisées, des moyens (60) pour comparer les informations mémorisées d'heure limite de stationnement autorisé à ladite information de temps présent et des moyens de traitement pour traiter les résultats desdites comparaisons pour faire apparaître dans ledit terminal un signal d'avertissement (70) lorsque le véhicule dont l'information d'identification a été introduite dans ledit terminal est en stationnement irrégulier ;
caractérisé en ce qu'il comprend en outre :
une pluralité de moyens d'affichage (14) distincts de plaques minéralogiques aptes à être fixés sur un véhicule, chaque moyen d'affichage portant une donnée d'identification, chaque donnée d'identification étant reliée de façon bi-univoque à l'information d'identification portée sur ledit support d'informations ; et
en ce que les informations d'identifications sont indépendantes du propriétaire du véhicule et du numéro d'immatriculation de celui-ci.

2. Système selon la revendication 1, caractérisé en ce que ladite donnée d'identification portée sur lesdits moyens d'affichage (14) est reliée à l'information d'identification par un algorithme de codage, et en ce que lesdits moyens d'affichage (14) peuvent être fixés de façon visible sur ledit véhicule.

3. Système selon l'une quelconque des revendications 1 et 2, caractérisé en ce que ladite donnée d'identification est affichée sous forme d'un code graphique, et en ce que lesdits moyens pour entrer ladite donnée d'identification dans ledit terminal comprennent un convertisseur opto-électrique (80) pour convertir le code graphique en des signaux électriques représentatifs de ladite donnée d'identification.

4. Système selon l'une quelconque des revendications 1 à 3, caractérisé en ce que lesdits moyens pour entrer une information d'heure limite de stationnement comprennent des moyens accessibles aux utilisateurs pour entrer une information de durée de stationnement et des moyens pour ajouter à l'information de temps présent ladite durée.

5. Système selon l'une quelconque des revendications 1 à 3, caractérisé en ce que lesdits moyens pour entrer une information d'heure limite de stationnement autorisé comprennent des moyens pour ajouter à l'information de temps présent une durée prédéterminée égale à la durée maximale de stationnement autorisé.

6. Système selon l'une quelconque des revendications 4 et 5, caractérisé en ce que ladite borne comprend des moyens pour convertir en un montant ladite durée de stationnement introduite et des moyens pour diminuer dudit montant le solde inscrit dans ledit support d'informations.

7. Système selon la revendication 1, caractérisé en ce que ladite borne comprend des moyens pour comparer, lors de l'introduction d'un support d'informations, l'heure de ladite introduction avec lesdites informations mémorisées d'heure limite de stationnement autorisé, et l'information d'identification dudit support avec lesdites informations d'identification mémorisées pour en déduire si l'information d'identification dudit support est bien mémorisée et si l'heure limite de stationnement correspondante est postérieure à l'heure d'introduction.

## Claims

1. System for managing paid-for vehicle parking by means of cards comprising:
a plurality of portable information media (10), with each information medium being carried by a vehicle driver, and including an identification information specific to the card, and an area for storing successive credit balances;
a parking terminal (20) for use in checking a plurality of parking spaces, said terminal including means (26, 32) for reading information from and for writing information to said information media, means for entering information into said terminal concerning the expiry time of authorized parking as a function of prepayment performed by said driver, means (36) for storing pairs of data items corresponding to the identification information and to the corresponding expiry time of authorized parking information, and first means (38) for delivering current time information;
one portable terminal (22) carried by a checker for checking on parking, the terminal including means (62) accessible to said checker for entering an item of identification of the vehicle parked in one of said parking spaces; and
means (60) for comparing the item of identification as entered with the identification information as stored, means (60) for comparing the stored information concerning the expiry time of authorized parking with said current time information, and processor means for processing the results of said comparisons in order to cause a warning signal (70) to appear on said portable terminal when a vehicle whose identification information has been inserted into said terminal is illicitly parked;
characterized in that it further comprises:
a plurality of distinct display means (14) for displaying registration plates suitable for being fixed on a vehicle, each display means including an item of identification, each item of identification being related in a one-to-one manner to the identification information carried by said information medium ; and
in that the identification information is independent of the vehicle driver and of the registration number thereof.

2. System according to claim 1, characterized in that said item of identification displayed on said display means (14) is related to the identification information by a coding algorithm, and in that said display means (14) can be fixed in visible manner on said vehicle.

3. System according to any one of claims 1 and 2, characterized in that said item of identification is displayed in the form of a graphic code, and in that said means for entering said item of identification into said portable terminal include an optoelectrical converter (80) for converting the graphic code into electrical signals representative of said item of identification.

4. System according to any one of claims 1 to 3, characterized in that said means for entering information concerning parking expiry time include means accessible to drivers for entering parking duration information, as well as means for adding the current time information to said duration.

5. System according to any one of claims 1 to 3, characterized in that said means for entering information concerning the expiry time of authorized parking include means for adding a predetermined duration to the current time information, with said predetermined duration being equal to a maximum period of authorized parking.

6. System according to any one of claims 4 and 5, characterized in that said parking terminal includes means for converting said entered parking duration into an amount of money, and means for substrating said amount from the balance recorded in said information medium.

7. System according to claim 1, characterized in that said parking terminal includes means for comparing, when an information medium is inserted, the time at which said medium is inserted with said stored information concerning the expiry time of authorized parking, and the identification information of said medium with said stored identification information in order to deduct therefrom whether the identification information of said medium is properly stored and whether the corresponding parking expiry time is later than the time of insertion.

## Patentansprüche

1. Einrichtung für die Verwaltung eines gebührenpflichtigen Parkplatzes für Kraftfahrzeuge mittels Ausweiskarten, mit:
einer Mehrzahl beweglicher Informationsträger (10), wobei jeder Informationsträger im Besitz eines Fahrzeugbenutzers ist und Information zur Identifizierung auf der Karte enthält sowie eine Zone für die Abspeicherung des Restbetrages;
einer Parkuhr (20) für die Überwachung einer Mehrzahl von Parkplätzen, wobei besagte Parkuhr Mittel (26, 32) für das Lesen und Schreiben von Informationen auf den Datenträgern, Mittel für das Eintragen von Information über das Parkdauerende in Abhängigkeit von der Vorauszahlung durch den Fahrzeugbenutzer in besagter Parkuhr, Mittel (36) für die Abspeicherung von paarweisen Eingaben der Informationen zur Identifizierung und Informationen über das Parkdauerende und erste Mittel (38) für die Ausgabe der gegenwärtigen Zeit umfaßt;
einem tragbaren Endgerät (22) für den Parkplatzwärter zur Überwachung des Parkplatzes, das Mittel (62) enthält, die besagtem Parkplatzwärter die Eingabe der Information zur Identifizierung eines geparkten Kraftfahrzeugs auf einem der Parkplätze ermöglicht; und Mitteln (60) für den Vergleich der eingegebenen Identifizierung mit Informationen zur Identifizierung im Speicher, Mittel (60) für den Vergleich der gespeicherten Informationen über das Parkdauerende mit besagter Information über die gegenwärtige Zeit und Verarbeitungsmittel für die Verarbeitung besagter Vergleichsergebnisse, um an besagtem Endgerät ein Warnsignal (70) zu erzeugen, wenn das Kraftfahrzeug, dessen Identifizierung in das Endgerät eingegeben wurde, unerlaubt parkt;
**gekennzeichnet** durch:
eine Mehrzahl unterschiedlicher Anzeigemittel (14), die als Nummernschild am Kraftfahrzeug angebracht werden können, wobei jede Anzeige eine Identifizierung trägt, die wiederum in eineindeutiger Weise mit der Information zur Identifizierung auf besagtem Datenträger in Zusammenhang steht; und dadurch
daß diese Informationen zur Identifizierung unabhängig vom Eigentümer des Kraftfahrzeugs und von der Zulassungsnummer sind.

2. Einrichtung nach Anspruch 1,
gekennzeichnet dadurch, daß
besagte Identifizierung auf besagten Anzeigemitteln (14) mit der Information zur Identifizierung über einen kodierten Algorithmus in Zusammenhang steht, und daß besagte Anzeigemittel (14) sichtbar auf besagtem Kraftfahrzeug angebracht werden können.

3. Einrichtung nach einem der Ansprüche 1 und 2,
gekennzeichnet dadurch, daß
besagte Identifizierung in Form eines Grafik-Codes angegeben wird, und daß besagte Mittel für die Eingabe der Identifizierung in besagtem Endgerät einen optoelektrischen Wandler (80) für die Umwandlung des Grafik-Codes in elektrische Signale enthält, die besagter Identifizierung entsprechen.

4. Einrichtung nach einem der Ansprüche 1 bis 3,
gekennzeichnet dadurch, daß
besagte Mittel für die Eingabe des Parkdauerendes für den Benutzer zugängliche Mittel umfassen, die die Eingabe der Parkdauer erlauben, und Mittel für das Aufaddieren der Dauer zur gegenwärtigen Zeit.

5. Einrichtung nach einem der Ansprüche 1 bis 3,
gekennzeichnet dadurch, daß
besagte Mittel für die Eingabe des Parkdauerendes Mittel für die Addition einer maximalen, vorgegebenen Dauer zur gegenwärtigen Zeit umfassen.

6. Einrichtung nach einem der Ansprüche 4 und 5,
gekennzeichnet dadurch, daß
besagte Parkuhr Mittel für die Umwandlung der besagten eingegebenen Parkdauer in einen Betrag und Mittel für die Verminderung des eingetragenen Restbetrages auf dem Informationsträger umfaßt.

7. Einrichtung nach Anspruch 1,
gekennzeichnet dadurch, daß
besagte Parkuhr Mittel enthält, die bei jeder Einführung eines Informationsträgers den Zeitpunkt des Einführens mit den gespeicherten Informationen über das Parkdauerende und die Identifizierungsinformation besagten Datenträgers mit den gespeicherten Identifizierungsinformationen vergleichen, um danach zu entscheiden, ob die Identifizierungsinformation besagten Datenträgers richtig abgespeichert wurde und ob das Parkdauerende nach dem Einführungszeitpunkt liegt.
